# EUROPEAN PATENT APPLICATION

(11) **EP 1 555 821 A1**
(43) Date of publication of application: **20.07.2005**
(21) Application number: 04000524.1
(22) Date of filing: 13.01.2004
(51) Int. Cl.: H04N 7/167

(54) **Method for pre-processing digital data, digital to analog and analog to digital conversion system**

(71) Applicant: Sony International (Europe) GmbH, 10785 Berlin (DE)
(72) Inventor: Spalink, Gerd, c/o Stuttgart Technology Center, 70327 Stuttgart (DE); Freiburg, Volker, c/o Stuttgart Technology Center, 70327 Stuttgart (DE); Wagner, Peter, c/o Stuttgart Technology Center, 70327 Stuttgart (DE)
(74) Representative: Müller - Hoffmann & Partner

(57) **Abstract**

A Method for pre-processing digital data and in particular of pre-processing digital video and/or digital audio data is provided, wherein a step of encoding (S3) a primary data stream (D1), a step of encrypting (S4) an encoded primary data stream (ED1) and a process of generating (P3) a preview data stream (PD) are built in and/or embedded within a common process (P2) of encoding said primary data stream (D1) in particular by integrating these processes and/or steps within a single and common encoder. The present invention additionally relates to a conversion system (10, 20) having a conversion functionality (11, 21) and a logic functionality (12, 22). Key aspect of the present invention is that said conversion functionality (11, 21) and said logic functionality (12, 22) are embedded in one single and common unit.

## Description

The present invention relates to a method for pre-processing digital data and in particular to a method for pre-processing digital video data and/or digital audio data. The present invention further relates to a respective system, apparatus, device and/or the like as well as to digital data and preview data produced by the inventive method and/or by the inventive system, apparatus, device and/or the like. Finally, the present invention relates to a respective computer program product and to a computer readable storage medium.

The present invention further relates to a digital to analog conversion system and to a analog to digital conversion system. The present invention relates more particular to reconfigurable digital to analog converter devices and to reconfigurable analog to digital converter devices.

When generating and providing digital data, e.g. digital video data and/or digital audio data, generally a preview function is helpful and/or necessary for successfully advertising and/or selling the respective digital data with respect to a customer or a audience or the like. However, because of the provided preview function and the respective preview data streams connected therewith several obstacles and disadvantages occur.

For instance, today's digital coding methods generally handle the preview data stream and the data stream which is also called the full data stream, separately. Therefore, the burden with respect to handling the respective data streams increases. Further on, the strategy of handling the preview data stream and the full data stream separately enables a third party to reconstruct from the preview data and/or to circumvent the used encryption schemes. Additionally, providing besides the full data stream an additional preview data stream increases the amount of data and the size of the content which has to be transferred.

Additionally, the following should be observed:

In many electronic appliances and electronic customer devices certain amounts of analog data or digital data have to be received and have to be converted into its digital and analog equivalent, respectively. Further, it is often necessary to combine such a conversion process with certain logic operations, e. g. to encrypt/decrypt the respective digital data or perform some kind of data conversion, data pre-processing, data format adaptation and/or the like.

Sometimes, it is not necessary or it has to be avoided that intermediate data - i. e. data already in digital format - together with data in the digital format which have already been subjected to a respective logic operation, for instance, which have been encrypted/decrypted, can be accessed externally. If, for instance, one is able to have access to encrypted digital input data and access to the respective encrypted version of said digital data it might be possible to resolve and obtain the respective encryption/decryption scheme so that data protection and the protection of the respective encryption/decryption algorithms is no longer guaranteed.
- It is an object of the present invention to provide a method for pre-processing digital data streams in a simple and reliable manner without making the encryption scheme invalid and further without increasing the amount of data to be held and transferred.

The object is achieved by a method for pre-processing digital data according to the characterizing features of independent claim 1. Alternatively, the object is achieved by a method for pre-processing digital data according to the characterizing features of independent claim 2. Preferred embodiments of the inventive method for pre-processing digital data are defined in the dependent sub-claims. The object is also achieved by a system for pre-processing digital data, by a digital data stream which is produced by the inventive method, by a preview data stream which is produced according to the inventive method or system, by a computer program product, as well as by a computer readable storage medium according to independent claims 21, 22, 23, 24, and 25, respectively.
- Additionally, it is a further object of the present invention to provide a digital to analog conversion system and an analog to digital conversion system in which certain logic functionalities can be used and performed in a particular safe and reliable manner, in particular while preventing an external access.

The further object is achieved by a digital to analog conversion system according to the characterizing features of independent claims 26 and 29 as third and fourth solutions. Additionally, the object is achieved by an analog to digital conversion system according to the characterizing features in dependent claim 27 and 30 as fifth and sixth solutions. Preferred embodiments of the inventive digital to analog conversion system and of the inventive analog to digital conversion system are defined in the dependent sub claims. The object is further achieved by an application of the conversion systems according to claim 37, by a computer program product according to independent claim 38, as well as by a computer readable storage medium according to independent claim 39.
- For both first and second solutions of the object underlying the invention the inventive method for pre-processing digital data is in particular adapted for pre-processing digital video data and/or digital audio data. The inventive methods for pre-processing digital data comprises a process of receiving, providing and/or generating a primary data stream of digital data having high quality content, a step of encoding said primary data stream or a derivative thereof to obtain an encoded primary data stream, a process of generating a preview data stream from said primary data stream, said preview data stream having a reduced quality content when compared to said high quality content, a process of providing and/or outputting said encrypted encoded primary data stream or a derivative thereof as a secondary or full data stream.
- According to the first solution for the object underlying the invention it is provided that before said step of encoding said primary data stream or said derivative thereof and after said process of generating said preview data stream are performed a separate and/or explicit step of decorrelating or decorrelation of said primary data stream or said derivative thereof and said preview data stream is performed in order to obtain a decorrelated primary data stream as said derivative of said primary data stream and/or in order to thereby enable said step of encoding said primary data stream or said derivative thereof to obtain said encoded primary data stream or a derivative thereof in a manner so that said encoded primary data stream or said derivative thereof and said preview data stream are decorrelated with respect to each other.

It is therefore a basic aspect of the present invention according to the first solution for the object underlying the invention to provide a separate and/or explicit step of decorrelating or decorrelation of said primary data stream or said derivative thereof and said preview data stream which is performed before said step of encoding said primary data stream or said derivative thereof and after said process of generating said preview data stream are performed.
- According to the second solution for the object underlying the invention it is provided that said step of encoding said primary data stream or said derivative thereof and/or said process of generating said preview data stream are performed in a - in particular simultaneous - manner and/or are adapted or designed in order to thereby inherently and/or implicitly perform a step of decorrelating or decorrelation of said primary data stream or said derivative thereof and said preview data stream in order to thereby obtain said encoded primary data stream or a derivative thereof and said preview data stream which are decorrelated with respect to each other.

It is therefore a basic aspect of the present invention according to the second solution for the object underlying the invention to provide an inherent and/or implicit step of decorrelating or decorrelation of said primary data stream or said derivative thereof and said preview data stream which is performed inherently, implicitly, simultaneously and/or together with said step of encoding said primary data stream or said derivative thereof and of said process of generating said preview data stream.

A common aspect of both solutions is the provision of a step of decorrelation of the primary data stream and the preview data stream.

According to a preferred embodiment of the inventive method said preview data stream is provided and/or output as separate output data.

It is advantageous if the inventive method further comprises a step of encrypting said encoded primary data stream in order to obtain an encrypted encoded primary data stream as said or as a derivative of said encoded primary data stream.

Additionally or alternatively in an embodiment of the inventive method the step of encoding said primary data stream or said derivative thereof, the step of decorrelating or decorrelation, the step of encrypting said encoded primary data stream and/or the process of generating said preview data stream are built in and/or embedded within a common process of encoding said primary data stream, in particular by integrating these processes/steps within a single and common encoder.

It is therefore a basic aspect of the present invention according to this embodiment to include, integrate, incorporate and/or embed e.g. the necessary process of generating said preview data stream within a common process of encoding said primary data stream and therefore to integrate said process of generating said preview data stream with further steps within the process of encoding said primary data stream. Therefore, according to the present invention the method for pre-processing digital data can be simplified and performed in a particular compact way.

According to a preferred embodiment of the inventive method for pre-processing digital data said preview data stream is provided and/or outputted as a separate output data stream or as separate output data.

Additionally, or alternatively, said preview data stream and said encoded primary data stream or said derivative thereof, in particular said encrypted encoded primary data stream are embedded within a common secondary or full data stream, in particular by a step of multiplexing said preview data stream and said encoded primary data stream or said derivative thereof, in particular said encrypted encoded primary data stream which is further in particular built in and/or embedded within said common process of encoding. According to this measure the thereby generated preview data stream may also or in contrast to the embodiment mentioned before provided and/or outputted as being contained or embedded within said provided and/or outputted secondary data stream or full data stream.

According to a further alternative of the present invention before said step of encoding said primary data stream or said derivative thereof a step of decorrelation or decorrelating with respect to said preview data stream or a pre-form thereof may be performed so as to obtain a decorrelated primary data stream as a derivative of said primary data stream.

In this particular case said step of decorrelation or decorrelating may be further performed with respect to a quality scaled and non-encoded form of said primary data stream or with respect to a quality scaled, encoded and then again accordingly decoded from of said primary data stream.

Further additionally or alternatively, said step of decorrelation may be chosen, performed and/or designed so as to reduce the data or information amount or content of said decorrelated primary data stream when compared to said primary data stream or the derivative thereof.

According to a further preferred embodiment of the present invention within the common encoding process said process of generating said preview data stream and said steps of decorrelation and/or of encoding said primary data stream or said derivative thereof may be performed in parallel and/or essentially simultaneously.

In this case, according to a further preferred embodiment of the present invention an appropriate step of delay compensation may be applied to said primary data stream before said step of decorrelation and/or before said step of encoding said primary data stream so as to compensate any temporal delay.

It is a further aspect of the present invention to subject within said process of generating said preview data stream said primary data stream to a step of quality scaling which in particular may vary of time, so as to obtain a reduced quality primary data stream having a reduced quality content when compared to the high quality content of the primary data stream itself.

In this case said reduced quality primary data stream may be subjected to a step of encoding so as to obtain said preview data stream having a reduced amount/content of data/information when compared to said reduced quality primary data stream and/or when compared to said primary data stream itself.

According to a further preferred embodiment of the inventive method said step of encoding said primary data stream or said derivative thereof, the step of decorrelating or decorrelation and the process of generating said preview data stream (PD) are built in and/or embedded within a common process of encoding, decorrelating and splitting, in particular by integrating these processes/steps within a single and common module or encoder.

In this case said common process of encoding, decorrelating and splitting comprises a step of time variant scaling and splitting.

Preferably, said step of time variant scaling and splitting is designed in order to perform a first time variant coefficient quantization of said primary data stream or of a derivative thereof - in particular with respect to a low quality profile - in order to obtain said preview data stream or a pre-form thereof.

Further, said step of time variant scaling and splitting may be is designed in order to perform a second time variant coefficient quantization of said primary data stream or of a derivative thereof - in particular with respect to a high quality profile - in order to obtain said encoded primary data stream or a pre-form thereof.

Alternatively or additionally, before said second time variant coefficient quantization of said primary data stream or of said derivative thereof said preview data stream or said pre-form thereof may be subtracted from said primary data stream or from said derivative thereof in order to decorrelate said primary data stream or said derivative thereof from said primary data stream or from said derivative thereof.

According to a further preferred embodiment of the inventive method said common process of encoding, decorrelating and splitting may comprise as an entry step a step of pre-encoding said primary data stream, in particular in order to obtain said derivative of said primary data stream and/or in particular before said step of time variant scaling and splitting.

According to a further an advantageous embodiment of the inventive method said common process of encoding, decorrelating and splitting may comprise as at least one exit step at least one step of post-encoding said pre-form of said preview data stream and/or of post-encoding said pre-form of said encoded primary data stream, in particular in order to obtain said preview data stream and said encoded primary data stream, respectively, and/or in particular after said step of time variant scaling and splitting.

In this case as a first exit step a step of post-encoding said pre-form of said preview data stream may be performed in order to obtain said preview data stream and as a second exit step a step of post-encoding said pre-form of said encoded primary data stream may be performed in order to obtain said encoded primary data stream.

It is a further aspect of the present invention to provide a system, an apparatus, a device and/or the like which is capable of and designed for performing and/or realizing the inventive method for pre-processing digital data and/or the steps thereof.

Additionally, according to the present invention digital data streams and/or preview data streams are provided which are generated according to the inventive method for pre-processing digital data and/or according to the system, apparatus, device and/or the like according to the present invention.

Further, according to the present invention a computer program product is provided, which is adapted and/or designed to realize and to perform the inventive method for pre-processing digital data and/or the system for pre-processing digital data according to the present invention.

Finally, according to a further aspect of the present invention a computer readable storage medium is provided which comprises the computer program product according to the present invention.
- The present invention with respect to the first and second solutions will be explained in other words according to the following remarks:

Inter alia the present invention relates to a codec with content protection and inherent preview.

A basic problem is that a preview function is necessary to successfully sell content. Today's digital coding methods handle preview and content separately. This makes handling difficult and opens possible doors to break encryption.

The aspects are elucidated by the following remarks:
Difficulty of handling: If preview and content are provided separately, the typical problem is that someone has gained access to the preview, likes it and is now searching for the "real thing". Now this person has to start a search to find the original content. Likewise, the owner or distributor has the difficulty to organize the content in order to correctly associate preview and full content.
Break encryption: If someone has both the encrypted full content and the corresponding unencrypted preview, the preview is guaranteed to have some correlation to the decrypted full content. It can therefore be used to help to find the correct decryption operation quickly.

Further, providing a preview data stream or a preview function generally increases the size or amount of the data or content to be stored or to be transferred.

A solution provided by the present invention is to build or embed the preview function into and/or within encoder and decoder and/or the respective encoding and decoding processes, respectively. Thereby, protected content is guaranteed to be uncorrelated to preview version of content.

Encryption for content protection is a common technology, Example are DTCP for distribution over networked and storage media, HDCP for digital connections between source decoder and display. Encoding of content to reduce the data size is also a common technology, e.g. for audio ATRAC or MP3, for video DV, MPEG2 or JVT. These technologies are usually lossy, requiring a trade-off between data size and quality.

The encapsulated PostScript format can embed preview pictures into the file, which is equivalent to the MUX block in our invention. The same is known for TIFF and JPEG. However, this preview is completely independent from the rest of the file.

A possible aspect of an inventive solution may be described as follows:

A preview function is built or embedded into or within the respective encoder and decoder and/or into or within the respective encoding and decoding processes, respectively. Protected content is guaranteed to be uncorrelated to a preview version of the content. A decorrelator or decorrelation block might be a simple subtraction operator or operation (e.g. for video) or more sophisticated (e.g. for audio). The decorrelation leads to a lower amount of information in the content to be encoded in particular by a 2^{nd} encoder and to be encrypted, so the total data size or total amount of data is not increased by the preview function. Preferably, but not necessarily the first encoder and said second encoder or encoders 1 and 2 are lossy to achieve a significant reduction of the data size to be transferred to the customer.

Some of the advantages achieved by the present invention are:
- Inherent preview function for all content.
- Preview function does not increase data size for the same quality.
- Preview version of stream does not help to break encryption of full stream: The decorrelator block in the encoder guarantees that the encrypted content is uncorrelated to the preview stream.
- Time variant quality scaler enables short preview excerpts from original longer content.

Another possible aspect of an inventive solution provided by the present invention may be described as follows:

The decoder for the preview stream can be fed from the preview stream directly. It can also be fed from the full stream, if the demultiplexing block is implemented. The decoder for the full stream can show either the preview stream only or the full stream, if the proper key for the encrypted part is present. In that case the correlator block reverses the de-correlation done in the encoder.

A preferred embodiment puts the key elements into a single device - in the Fig. indicated by a dashed line - to avoid tampering the encryption.
- According to the present invention with respect to the third and fourth solutions, the digital to analog conversion system comprises a digital/analog conversion functionality or unit and a logic functionality or unit. Said digital/analog conversion functionality or unit and said logic functionality or unit are contained, embedded and/or sealed in or within one single and common unit, device and/or circuit.
- According to the present invention with respect to the fifth and sixth solutions, the analog to digital conversion system comprises an analog/digital conversion functionality or unit and a logic functionality or unit. Said analog/digital conversion functionality or unit and said logical functionality or unit are contained, embedded and/or sealed in or within one single and common unit, device and/or circuit.

It is a basic aspect of the inventive conversion systems to provide a conversion functionality or unit and a logic functionality or unit which are not separated from each other but contained, embedded or sealed in or within one single and common unit, device and/or circuit. Therefore, an access to the respective data or the respective logic operations, in particular from external, is prohibited and therefore avoided. Without having access to the respective data or logic operations a reconstruction from external with respect to the logic functionality algorithm or the like is not possible, thereby guaranteeing a safe operation and data conversion.
(A) It is another key idea of the present invention of the third to sixth solutions that said digital/analog functionality or unit and/or said analog/digital conversion functionality or unit of said conversion systems are arranged and/or designed to be programmably defined and/or definable, in particular externally. According to this particular measure it is not necessary anymore to substitute hardware components when changing the logic functionalities' or units' operation or algorithm as these operations or algorithms can be defined, changed, substituted and/or reconfigured, in particular by an external measure.
(B) Additionally or alternatively, it is a further key idea of the present invention of the third to sixth solutions that said digital/analog conversion functionality or unit and/or said analog/digital conversion functionality or unit are arranged and/or designed to be - in particular programmably - reconfigurable, in particular externally.

Key ideas (A) and (B) may be seen independently, but they may also be realized in combination.

According to a further preferred embodiment of the inventive conversion systems a reconfiguration means is provided for externally programming and/or reconfiguring said logic functionality or unit. Said reconfiguration means may, in particular, be designed as a reconfiguration line supplying certain reconfiguration commands, operations and/or data.

In this case, said reconfiguration means may be directly connected and/or connectable to said logic functionality or unit.

According to a further preferred and advantageous embodiment of the present invention said logic functionality or unit is designed, configured and/or configurable to be or to contain an encryption and/or a decryption functionality for digital data.

It is preferred that said logic functionality or unit is arranged and/or designed to receive digital input data for logic processing and to supply said logically processed input data as its output data, in particular as input data for said digital/analog conversion functionality or unit, in particular to an input terminal thereof for digital/analog conversion.

Alternatively, said logic functionality or unit is arranged and/or designed to receive digital input data for logic processing from said analog/digital conversion functionality or unit, in particular from an output terminal thereof and to provide said logically processed input data as output data.

The inventive conversion systems may be applied to a variety of situations. For instance, said inventive digital to analog conversion system and/or said inventive analog to digital conversion system may be applied as or within an encryption/decryption system or device, as or within an electronic customer device, as or within a data format adaptation system or device, as or within a pre-processing system or device for signal and/or data conversion and/or adaptation, as or within a linearization system of or for a power amplifier, in particular in or for a wireless transmission system, and/or the like.

In the case of a linearization system of or for a power amplifier, in particular in or for a wireless transmission system, and/or the like, the invention is based on the requirement of a highly linear power amplifier in the field of digital modulation in order to drive a transmission antenna. However, it is more power efficient to operate the amplifier also in its non-linear area. The non-linear distortion that it generates can now be compensated in a very flexible way according to the present invention, and in particular with the inventive reconfigurable part. Additionally, to just compensate a time-invariant non-linear curve the invention can also compensate signal dependent and time dependent effects.

According to a further aspect of the present invention a computer program product is provided, comprising computer program means which is designed and/or adapted to realize and/or to perform the inventive conversion system and/or any one of the inventive applications thereof annd/or parts or steps thereof when it is executed on a computer, a digital signal processing means and/or the like.

According to a further aspect of the present invention a computer readable storage medium is provided which comprises an inventive computer program product.

In the following, the present invention will be discussed in more detail taking reference to the following remarks:

The present invention of the third to sixth solutions relates to the following problems:
a) For digital rights management, end to end protection is required. It is also necessary to change the protection algorithms frequently to guard against breaking the protection.
b) More flexible hardware is needed to cope with changing environments.

According to the present invention the following ideas for a solution may be important:

A digital to analog converter is combined with a re-configurable logic in a single device. The logic can be changed even after the device has been produced and sold. An access to digital decrypted signals is therefore physically impossible.

Re-configurable devices can be used e. g. for encryption or decryption purposes. Encryption for content protection is common technology, by companies like Intel, Sony and others. For example DTCP for distribution over networked and storage media, HDCP for digital connections between source decoder and display.

For instance in digital rights management the decryption is fixed or implemented in software. This does not satisfy the following requirements:
- End to end protection.
- Secret algorithm does not have to be disclosed to set manufacturer.
- Decryption algorithm can be changed in the field.

Other applications may be inter alia:
- Programmable gamma curve for video converter.
- Color space converter.
- Calibration (factory - product).

According to the present invention the programmable logic block can contain arbitrary functions that can be changed very easily through the configuration path. In a mass product, it is possible to manufacture the same device and put different logic into every device in a calibration process.

For content protection purposes, it is crucial to have a secure configuration path into the device.

The present invention of the third to sixth solutions may offer the following advantages:
- Tamper proof protection of digital content.
- Adaptation to new digital input formats, e.g. new encryption with devices already at the customer.
- Factory time calibration of analog parts after converter.
- Compensation of aging of analog parts after DA converter.

The present invention will be further elucidated by taking reference to the accompanying figures.
- **Fig. 1A, 1B**: is a schematical block diagram displaying the basic structure of a preferred embodiment of the inventive method for pre-processing digital data.
- Fig. 2: is a schematical block diagram which elucidates in more detail aspects of a further embodiment of the inventive method for pre-processing digital data with separate and explicit decorrelation.
- Fig. 3: is a schematical block diagram which elucidates the process of decoding and extracting a preview data stream directly or from a full data stream.
- **Fig.4**: is a schematical block diagram which elucidates details with respect to a process of decoding a full data stream according to the present invention.
- Fig. 5: is a schematical block diagram for a encoding scheme of a further embodiment of the present invention.
- Fig. 6: is a schematical block diagram which elucidates in more detail aspects of a further embodiment of the inventive method for pre-processing digital data with inherent and implicit decorrelation.
- **Fig.7**: is a schematical block diagram which elucidates details with respect to the embodiment of Fig. 6.
- Fig. 8: is a schematical block diagram which elucidates in more detail aspects of a further embodiment of the inventive method for pre-processing digital data again with separate and explicit decorrelation.

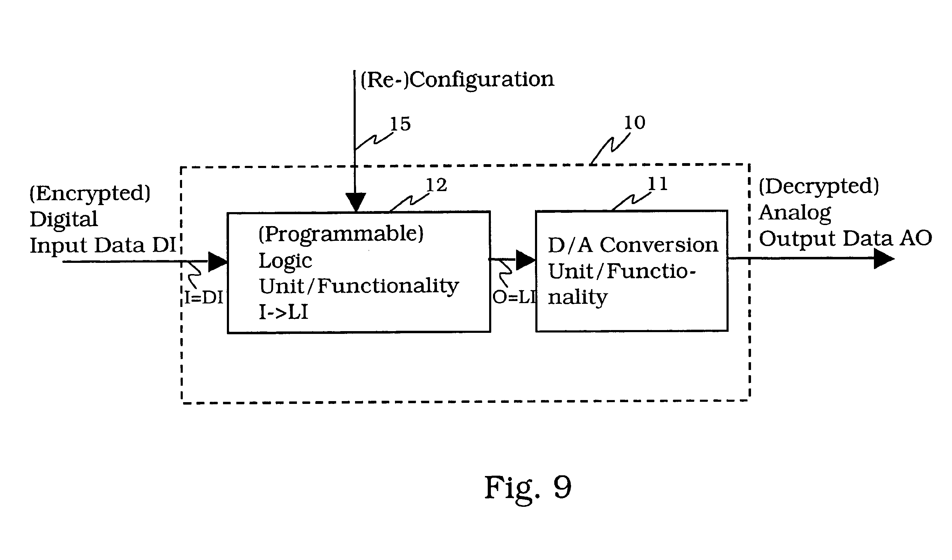

- Fig. 9: is a schematical block diagram of an embodiment of the inventive digital to analog conversion system.

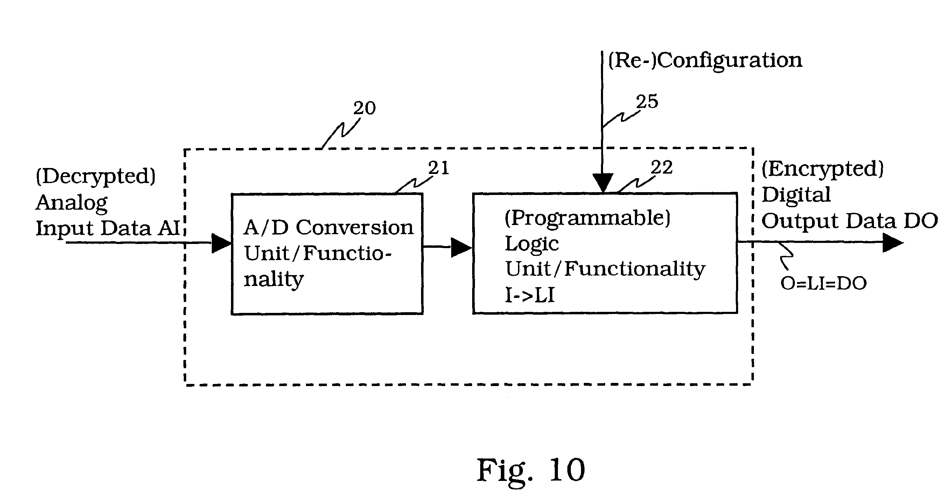

- Fig. 10: is a schematical block diagram of an embodiment of the inventive analog to digital conversion system.

In the following similar structures and functionalities are denoted by the same reference symbols and their description is not repeated in each case of their occurrence.
- In the following the first and second solutions will be explained in more detail:

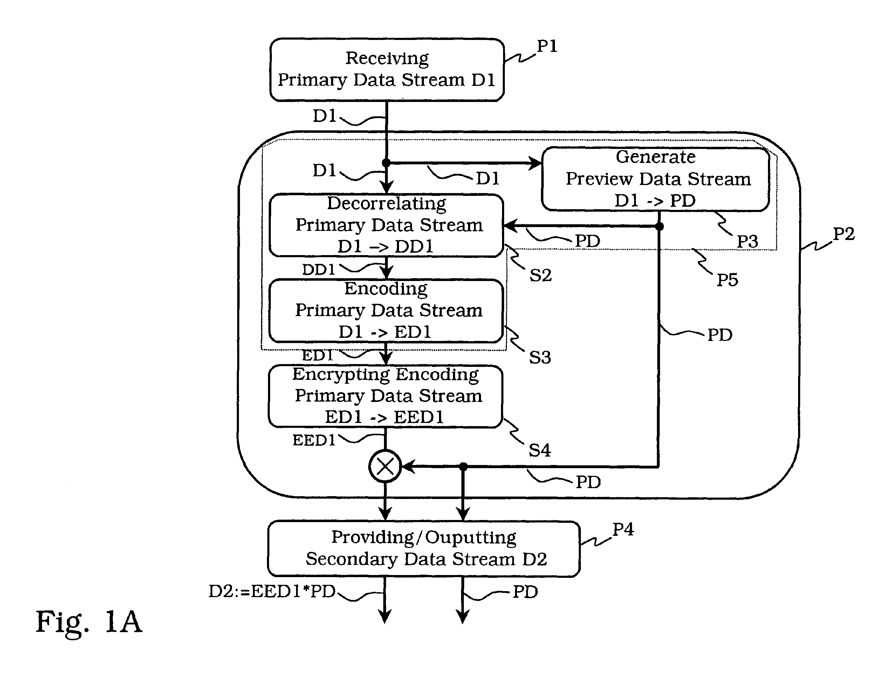

Fig. 1A demonstrates by means of a schematical block diagram some basic aspects of the present invention, i.e. with respect to the inventive method for pre-processing digital data.

The embodiment shown in Fig. 1A comprises a first process P1 of receiving, providing and/or generating a primary data stream D1 of digital data. Said digital data is assumed to have a high quality content. Within a following second process P2 said primary data stream D1 is on the one hand first encoded within a step S3 of encoding said primary data stream D1 so as to yield an encoded primary data stream ED1 and then encrypted within a following step S4 of encryption said encoded primary data stream ED1 so as to obtain encrypted encoded primary data stream EED1. And on the other hand said primary data stream D1 is subjected to a process P3 of generating a preview data stream PD. It follows a process P4 of providing and/or outputting said encrypted encoded primary data stream EED1 and said preview data stream PD. This can be done according to a variety of possible output schemes. On the one hand the preview data stream PD can be output and provided separately as a separate data stream. On the other hand said preview data stream PD can be included or embedded within the secondary data stream D2, i.e. together with said encrypted encoded primary data stream EED 1.

It is a basic aspect of the present invention to first of all decorrelate the preview data stream PD from the encrypted encoded primary data stream EED1 so that the overall amount of information or data is not increased. Therefore, it might be necessary to reduce the information amount when constructing the encrypted encoded primary data stream EED1 and to supply the preview data stream for completion to said encrypted encoded primary data stream EED1 so as to obtain a full data stream as a secondary data stream D2 by multiplexing the encrypted encoded primary data stream EED1 with said preview data stream PD.

In the embodiment of Fig. 1A the step S2 of decorrelation is performed in advance of said step S3 of encoding. Additionally, as said step S2 of decorrelation is based on said preview data stream PD already generated said step S2 of decorrelation is performed after said process P3 of generating said preview data stream PD. Said step S2 of decorrelation is therefore an explicit and separate processing step.

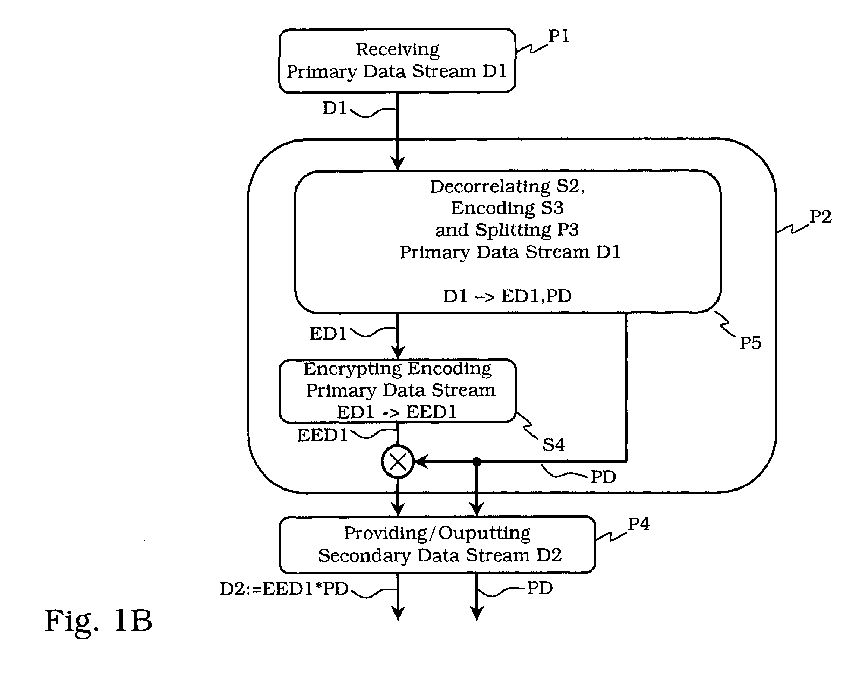

In contrast, in the embodiment of Fig. 1B said step S2 of decorrelation is an implicit processing step which is inherently performed with the step S3 of encoding and with the process P3 of generating said preview data stream PD.

In both embodiments of Fig. 1A and 1B the step S2 of decorrelation, the step S3 of encoding and the process P3 of generating said preview data stream PD may be seen as being integrated within a common process P5 or as being realized within a common processing module.

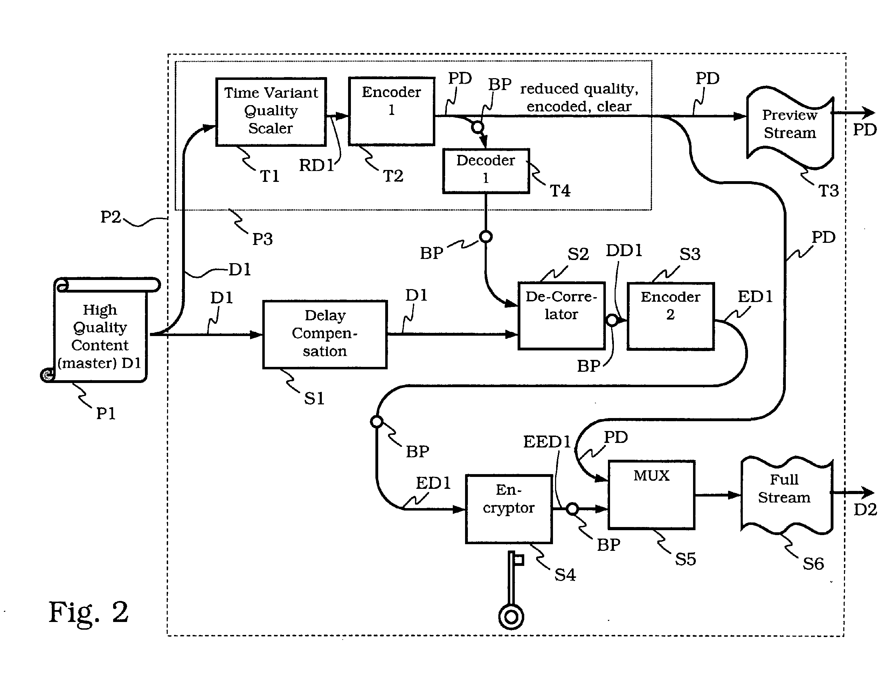

Fig. 2 is a schematical block diagram which shows more details of an preferred embodiment of the inventive method for pre-processing digital data. Here again a primary data stream D1 is received within a process P1 of receiving, generating and/or providing digital data of a high quality content which might be also seen as a master data stream. In the following process P2 the variety of pre-processing steps and processes are performed. There exist majorly two branches. The first of which pre-processing said primary data stream D1 so as to obtain the already above mentioned encrypted encoded primary data stream EED1 and the other branch being provided for generating and/or providing a preview data stream PD.

In the branch for generating encrypted encoded primary data EED1 first of all a delay compensation step S1 is performed so as to remove any temporal delay between the further processing of the primary data stream D1 when compared to the processing of the primary data stream D1 according to the process P3 so as to obtain said preview data stream PD. Then a step of decorrelation S2 is performed so as to obtain a decorrelated primary data stream DD1. The decorrelation of step S2 is done with respect to a quality scaled or primary data stream of reduced content or reduced quality RD1 and/or with respect to a quality scaled and encoded and decoded reduced quality primary data stream RD1 and therefore essentially with respect to the already generated preview data stream PD. Therefore, the obtained decorrelated primary data stream DD1 does not have any correlation with respect to the preview data stream. Therefore, by analyzing the preview data stream the encryption scheme which will be applied later cannot be reconstructed or obtained. Additionally, according to the decorrelation scheme of the step S2 the amount of data within the decorrelated primary data stream DD1 is reduced in a way that the integral amount of data for both the preview data stream PD and the decorrelated primary data stream DD1 is not increased when compared with the primary data stream D1.

Then, a step S3 of encoding using a second encoding process is performed with respect to said decorrelated primary data stream DD1 so as to obtain an encoded primary data stream ED1. Said encoded primary data stream ED1 is then supplied to a encryption scheme according to a step S4, so as to yield a encrypted encoded primary data stream EED1. The encrypted encoded primary data stream EED1 is then mingled by way of a multiplexing step S5 with said preview data stream PD so as to obtain a secondary or full data stream D2 which is then provided and/or outputted according to a step S6.

The other branch, i.e. the process P3 of generating and/or providing said preview data stream PD comprises as mentioned already above a first step T1 of quality scaling so as to yield a reduced quality primary data stream RD1 which is supplied to a following step T2 of a first encoding process using a first encoder. By the encoding process T2 the preview data stream PD is finalized and can be output within a step T3.

### Elucidation of quality scaling process T1

The quality scaling process T1 is a time-variant filter that operates in two states, a pass-state and a stop-state.

In the pass-state, the high-quality content D1 is filtered to a reduced-quality content RD1 with selectable quality level. This preview quality level is usually selected from a range with the lower bound corresponding to the minimum acceptable quality for preview and an upper bound corresponding to the maximum data rate of the preview stream PD.

During the stop-state, the output of process T1 is reduced to a 'null' signal, a signal without any information from the high-quality input. This state can be interpreted as quality being scaled down to zero. In case of an audio signal, the output of process T1 in the stop-state will be silence, for video it will be a black picture. There is no limit on the number of pass- and stop-states used for the processing of the high-quality content D1. In a preferable embodiment, a single pass-state is used for extraction of the pre-viewable stream RD1.

The embodiment of the transition between the stop-state and the pass-state of the filter can be either a simple switch between zero quality level and preview quality level, or a fading operation that gradually change the quality from zero level to preview level and back.

The quality reduction depends on the type of data to be processed, e.g. audio or video. Said quality reduction can be achieved by (but is not limited to) band-limiting of the signal, sub-sampling or re-sampling of the stream data, and reduction of the precision of each data value in the stream.

### Elucidation of encoding process T2 (encoder 1)

The primary purpose of the encoding process T2 (encoder 1) is a transformation (compression) of the content stream to reduce its size/amount of data. The compression can be a loss less or a lossy encoding that is suitable for the type of stream content in order to achieve an acceptable compression ratio. The input stream RD1 to the encoding process T2 retains the typical signal characteristics of an audio or video stream, so that a standard encoding scheme, e.g. MPEG, can be used for process T2.

### Elucidation of decoding process T4 (decoder 1)

The decoding process T4 reverses the transformation applied to reduced-quality stream RD1 by the encoding process T2. If the encoding scheme in use by said process is loss less, then the output PDD of decoding process T4 is identical to reduced quality stream RD1. If said encoding scheme is lossy, the output stream PDD has a strong similarity to the reduced-quality stream RD1, with some part of the information in stream RD1 removed (lost) by the encoding process T2.

### Relationship between encoding process T2 and decoding process T4

For a lossy encoding scheme used by encoding process T2, the output stream PDD of decoding process T4 is used instead of reduced quality stream RD1 in order to account for the signal losses incurred in said output stream PDD. Thus, it is ensured that the identical signal is used as input to the de-correlating process S2 during encoding as well as input to the correlating process V3 during decoding of the full stream D2.

### Relationship between encoding process T2 with respect to the preview data and encoding process S3 with respect to the primary data stream.

There is no other relationship between encoding process T2 and encoding process S3 than the content type of input stream D 1.

Other embodiments than a single and common encoder are possible. For example, at the indicated break-up points BP in the Fig. 2 the preview stream PD or the decoded preview stream DPD could be written to an appropriate storage medium in a first processing phase. Then, in a second processing phase, the stream PD or DPD is read back from the storage medium and injected at the break-up point BP is was recorded from. Other potential break-up points BP can be after decorrelation (DD1), encoding (ED1), encryption (EED1). The inventive concept is also be applicable to such multi-pass approaches.

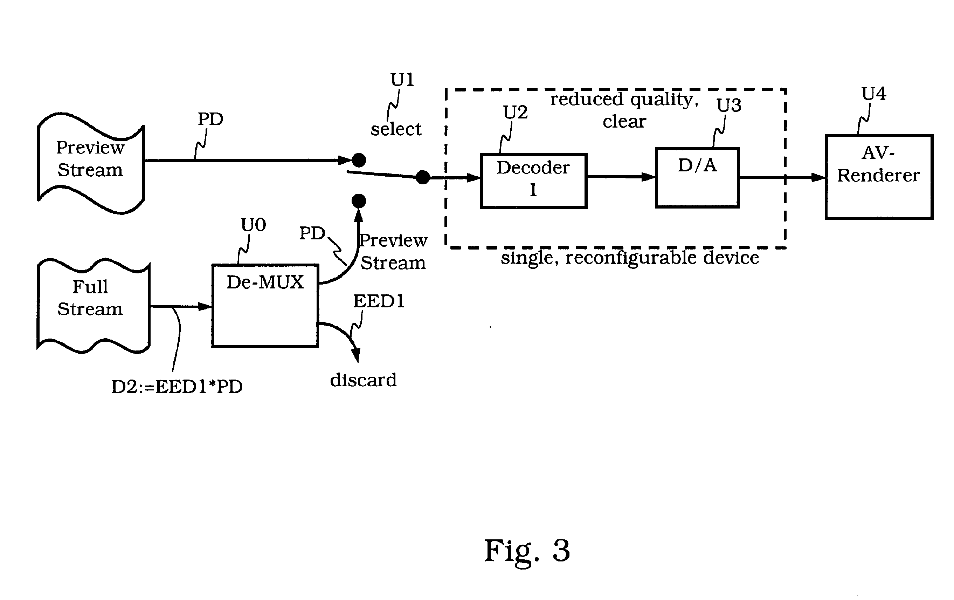

Fig. 3 is a schematical block diagram which demonstrates the decoding process with respect to a preview data stream PD. In a first step U1 it can be selected whether the preview data stream shall be received as a separated single data stream as described by the top branch or whether the preview data stream shall be obtained from the full data stream or secondary data stream D2 by a demultiplexing step U0 by means of which the preview data stream PD is separated from the encrypted encoded primary data stream EED1 which is in this case discarded. The obtained and selected preview data stream PD is then supplied to a decoding step U2 after which a step U3 of digital/analog conversion is performed. The result of the step U3 of digital/analog conversion is then supplied to a step U4 of audio/video-rendering.

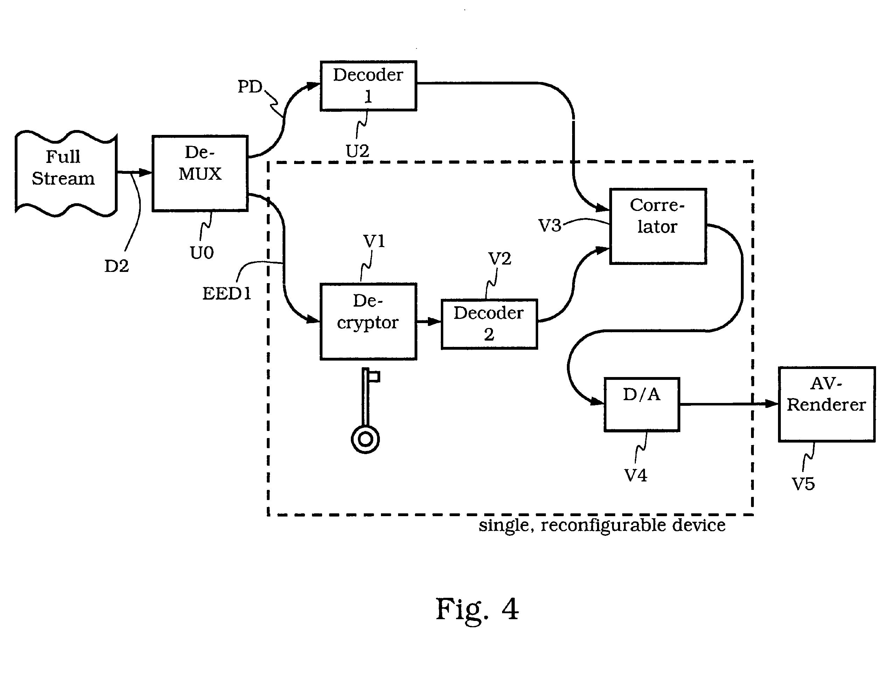

Fig. 4 schematically demonstrates some basic aspects of the process of analyzing and making available the audio/video content of a full data stream or secondary data stream D2. First of all the full data stream or secondary data stream D2 is supplied to a demultiplexing step U0 similar to that shown in the process of Fig. 3. By means of said demultiplexing step U0 the encrypted encoded primary data stream EED1 is separated from the preview data stream PD. The latter of which being supplied to a first decoder or first decoding step U2. The separated encrypted encoded primary data stream EED1 is then supplied to a decryptor or decrypting step V1 which performs the inverse operation compared to the step S4 of the process shown in Fig. 2. The decrypted data stream is then subjected to a decoding process of the second V2 which is essentially the inverse process to the decoding step S3 of the process shown in Fig. 2. The decoded and decrypted data stream is then supplied to a correlation step V3 together with the decoded preview data stream DPD so as to obtain the full audio/video content of the full data stream or secondary data stream D2. The output of the correlation step V3 is then supplied to a following step V4 of digital/analog conversion. The output of which being rendered in a audio/video rendering step V5.

### Alternative Embodiment

The embodiments described in detail above apply the time-variant quality scaling in the domain of the un-encoded high quality master signal. This approach is very generic and independent of the type of encoding used for the preview and the full data stream. An alternative embodiment can result in a computational more efficient approach by exploiting the properties of the encoding scheme.

State-of-the-art encoding schemes for audio and video signals apply multiple processing steps to achieve a lossy compression of the data stream. In the first step, the data is segmented into a sequence of data blocks. For audio, a data block denotes a fixed time interval of the audio signal. In case of video, the video picture is segmented into rectangular blocks of N¥N pixels. In the second step, the data blocks are processed by a discrete cosine transform (DCT), a modified DCT, a discrete wavelet transform (DWT), or any other transform from a block of signal data to a block of coefficients. In a third step, a subset of the coefficients is discarded and the remaining subset is reduced in precision according to a selected quantization scheme. The size of the subset of coefficients selected for the encoded data stream and their quantization influence both, the size of the encoded data stream, and the accuracy of the signal reconstruction during the inverse transform. With a reduction of the number of coefficients, a reduction of the total data size is achieved, with a trade-off in retained signal quality. The set of removed coefficients represent the part of information that is lost due to the encoding process. In a fourth step, the remaining quantized coefficients are recoded to a variable-length bit representation where shorter bit strings are assigned to coefficient values with higher probability of occurrence. A typical representative for this encoding scheme is MPEG audio and video.

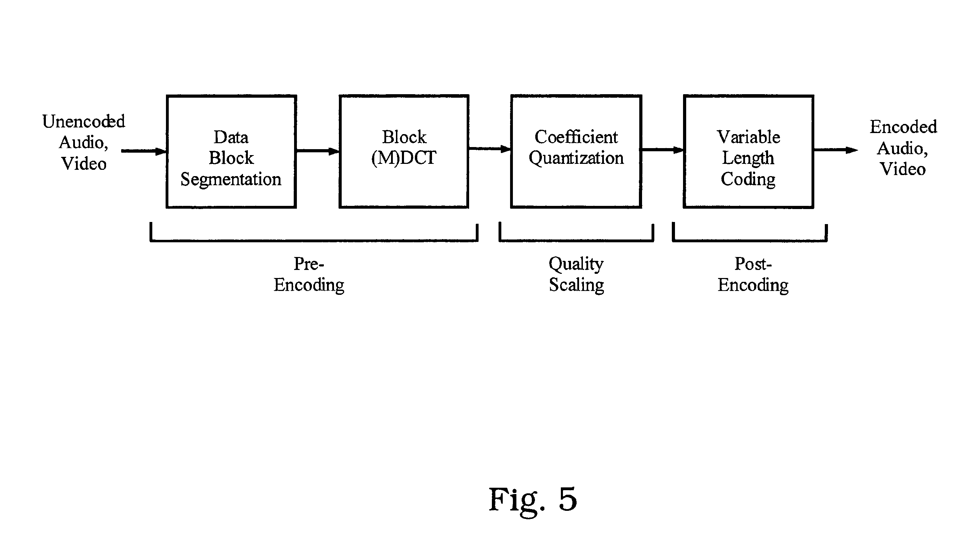

For the alternative embodiment, an encoding scheme with the said four steps of processing is assumed, with the first two steps together forming a pre-encoding step, the third step being part of the quality scaling and splitting, and the fourth encoding step forming the post-encoding step. Such an encoding scheme is shown in Fig. 5.

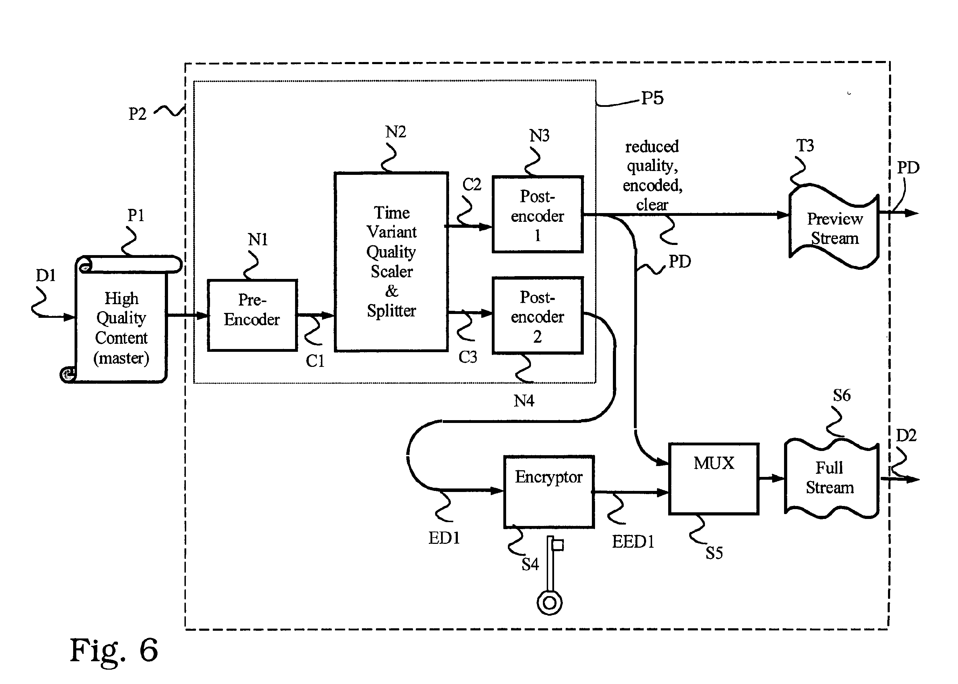

The alternative embodiment is shown in more detail in Fig. 6 by means of a schematical block diagram. This embodiment interleaves the time-variant quality scaling process and the data stream encoding process as depicted in Fig. 6.

The high quality content D1 is processed first by a pre-encoder N1 or pre-encoding step N1. This results in a data stream C1 of block-transformed coefficients C1. For each data block in said stream C1 a step N2 of time-variant quality scaling and splitting is performed, i.e. e.g. a time-variant scaler and splitter N2 is applied. There in a first step it selects a subset of coefficients to be retained in the data stream C2 and also quantizes the coefficients according to a low-quality profile. In a second step the splitting process or splitter N2 subtracts the coefficients of the data block in data stream C2 from the corresponding data block in data stream C1. From said differences of the coefficients, a subset is selected for being retained in the data stream C3, and these differences are quantized according to a high-quality profile.

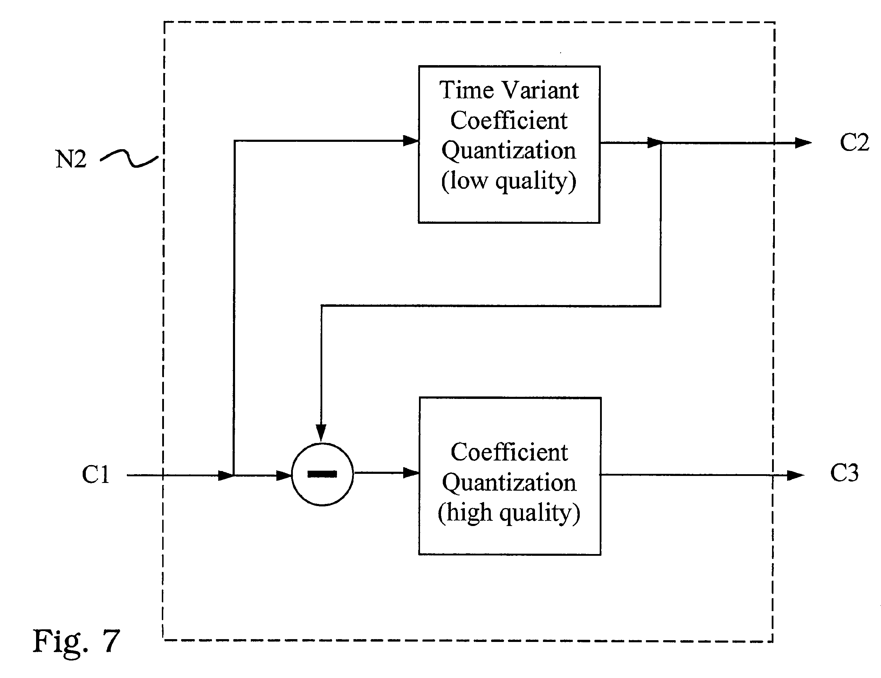

Fig. 7 shows the internals of process N2, i.e. the time-variant quantization with respect to a low quality profile and with respect to a high quality profile as well as a respective splitting or subtracting process.

### Alternative embodiment in case of encoding process T2 being loss less

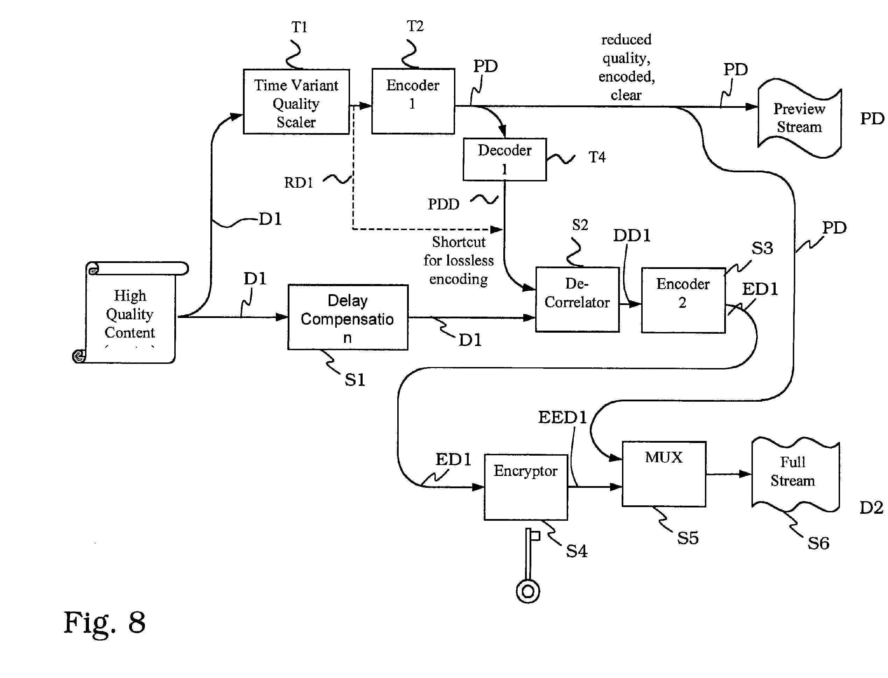

Fig. 8 shows by means of a schematical block diagram for an alternative embodiment in the case of an encoding process T2 which is loss less.

When the encoding process T2 uses an encoding scheme that is loss less, an alternative embodiment can be given by the figure below. Here, a loss less encoding is a data transformation (compression) that reduces the amount/size of the data stream without discarding any information. In other words, after decoding said encoded data stream with the corresponding (inverse) decoding process, the decoded data stream is (bit-for-bit) identical to the data stream used as input to said loss less encoding process. In the figure below, if encoding process T2 (encoder 1) uses a loss less encoding scheme then the output data stream PDD of decoding process T4 (decoder 1), which is input to the decorrelation process S2, is identical to the data stream RD1. In this case a preferable embodiment can feed data stream RD1 directly into the decorrelation process S2 without need for the decoding process T4.

In the invention the processing step S1 of delay compensation is required to compensate the cumulative delay time e.g. of the processes T1, T2 and T4 so that the decorrelation step S2 is applied between the original data (e.g. output of step S1) and processed data (e.g. output of T4) for the same point in time, which is important due to the structure of the decorrelation process. The delay compensation S1 is therefore preferably situated in front of or before the decorrelation process S2.
- In the following the third and sixth solutions will be explained in more detail:

In the following, functional and/or structural similar or equivalent elements are denoted by identical reference symbols and their detailed description will not be repeated in each case of their occurrence.

Fig. 1 is a schematical block diagram of an embodiment of the inventive digital to analog conversion system 10.

It consists of a logic functionality or unit 12 which is programmably defined and which can be configured or reconfigured by entering respective configuration or reconfiguration operations or data via a directly connected configuration means 15. During operation, digital input data I are received via an input terminal which may be, for instance, encrypted digital input data. Within said logic functionality or unit 12 said received digital input data I are logically processed according to a certain operation scheme or algorithm contained in the logic functionality or unit 12 thereby generating and/or providing logically processed input data LI which are then output as output data O and supplied to an input terminal of the following digital/analog conversion functionality or unit 11. According to the operation of said digital to analog conversion functionality or unit 11 said logically processed digital input data LI are converted to analog output data AO which may then be used for transmission, further signal processing, audible rendering and/or for visual rendering.

After receipt of the digital input data DI, I the logic performance and the digital to analog conversion are carried out within one single device and/or unit 10. These processes and respective units or devices are therefore sealed within said single and common device or unit 10. Therefore, an external access to the logically processed digital input data LI is impossible, thereby guaranteeing the safety of said logic operations, its algorithm and of the descriptive data thereof.

In a similar way, Fig. 2 shows an embodiment for an inventive analog to digital conversion system 20.

Here, the logic functionality or unit 22 follows the conversion functionality or unit 21 which is - in this case of an analog to digital conversion system - an analog to digital conversion functionality or unit 21. Upon receipt of analog input data AI according to the operations of said analog to digital conversion functionality or unit 21 a digital equivalent of said analog input data AI is provided and supplied to an input terminal of the following logic functionality or unit 22. Therefore, said digitally converted analog input data AI serve as digital input I for said logic functionality or unit 22. According to the operations of said logic functionality or unit 22 said digital input data I are logically processed and the result is obtained as output data O in the form of logically processed digital input LI which appear as digital output data DO at an output terminal of said logical functionality or unit 22.

As in Fig. 1 said logic functionality of unit 22 is defined in a programmable way and can be configured or reconfigured from externally by a directly connected configuration or reconfiguration means 25.

### Reference Symbols

- **D1**: primary data stream
- **D2**: secondary data stream, full data stream
- **DD1**: decorrelated primary data stream
- **DPD**: decoded preview data stream
- **ED1**: encoded data stream
- **EED1**: encrypted encoded primary data stream
- **PD**: preview data stream
- **RD1**: reduced quality/content primary data stream

- **10**: inventive conversion system, inventive digital to analog conversion system
- **11**: digital/analog conversion unit/ functionality
- **12**: logic unit/functionality
- **15**: configuration/reconfiguration means
- **20**: inventive conversion system, inventive analog to digital conversion system
- **21**: analog to digital conversion unit/functionality
- **22**: logic unit/functionality
- **25**: configuration/reconfiguration means

- **AI**: analog input data
- **AO**: analog output data
- **DI**: digital input data
- **DO**: digital output data
- **I**: input data
- **LI**: logically processed digital input data
- **O**: output data

## Claims

1. Method for pre-processing digital data, in particular digital video data and/or digital audio data,
comprising:
- a process (P1) of receiving, providing and/or generating a primary data stream (D1) of digital data having a high quality content,
- a step (S3) of encoding said primary data stream (D1) or a derivative (DD1) thereof in order to obtain an encoded primary data stream (ED1),
- a process (P3) of generating a preview data stream (PD) from said primary data stream (D1) said preview data stream (PD) having a reduced quality content when compared to said high quality content, and
- a process/step (P4, S6) of providing and/or outputting said encoded primary data stream (ED1) or a derivative (EED1) thereof as a secondary or full data stream (D2),
wherein before said step (S3) of encoding said primary data stream (D1) or said derivative thereof and after said process (P3) of generating said preview data stream (PD) are performed a separate and/or explicit step (S2) of decorrelating or decorrelation of said primary data stream (D1) or said derivative thereof and said preview data stream (PD) is performed in order to obtain a decorrelated primary data stream (DD1) as said derivative of said primary data stream (D1) and/or in order to thereby enable said step (S3) of encoding said primary data stream (D1) or said derivative (DD1) thereof to obtain said encoded primary data stream (ED 1) or a derivative (EED1) thereof in a manner so that said encoded primary data stream (ED1) or said derivative (EED1) thereof and said preview data stream (PD) are decorrelated with respect to each other.

2. Method for pre-processing digital data, in particular digital video data and/or digital audio data,
comprising:
- a process (P1) of receiving, providing and/or generating a primary data stream (D1) of digital data having a high quality content,
- a step (S3) of encoding said primary data stream (D1) or a derivative (DD1) thereof in order to obtain an encoded primary data stream (ED1),
- a process (P3) of generating a preview data stream (PD) from said primary data stream (D1) said preview data stream (PD) having a reduced quality content when compared to said high quality content, and
- a process/step (P4, S6) of providing and/or outputting said encoded primary data stream (ED1) or a derivative (EED1) thereof as a secondary or full data stream (D2),
wherein said step (S3) of encoding said primary data stream (D1) or said derivative thereof and/or said process (P3) of generating said preview data stream (PD) are performed in a - in particular simultaneous - manner and/or are adapted or designed in order to thereby inherently and/or implicitly perform a step (S2) of decorrelating or decorrelation of said primary data stream (D1) or said derivative thereof and said preview data stream (PD) in order to thereby obtain said encoded primary data stream (ED1) or a derivative (EED1) thereof and said preview data stream (PD) which are decorrelated with respect to each other.

3. Method according to any one of the preceding claims,
wherein said preview data stream (PD) is provided and/or output (T3) as separate output data.

4. Method according to any one of the preceding claims,
further comprising a step (S4) of encrypting said encoded primary data stream (ED1) in order to obtain an encrypted encoded primary data stream (EED1).

5. Method according to any one of the preceding claims,
wherein the step (S3) of encoding said primary data stream (D1) or said derivative (DD 1) thereof, the step (S2) of decorrelating or decorrelation, the step (S4) of encrypting said encoded primary data stream (ED1) and/or the process (P3) of generating said preview data stream (PD) are built in and/or embedded within a common process (P2) of encoding said primary data stream (D1), in particular by integrating these processes/steps within a single and common encoder.

6. Method according to any one of the preceding claims,
wherein said preview data stream (PD) and said encoded primary data stream (ED1) or said derivative thereof, in particular said encrypted encoded primary data stream (EED1) are embedded within said common secondary or full data stream (D2), in particular by performing a step (S5) of multiplexing said preview data stream (PD) and said encoded primary data stream (ED1) or said derivative thereof, in particular said encrypted encoded primary data stream (EED1) which is further in particular built in and/or embedded within said common process (P2) of encoding.

7. Method according to any one of the preceding claims,
wherein said step (S2) of decorrelation is performed with respect to a quality scaled (T1) and non-encoded form of said primary data stream (D1) or a quality scaled (T1) encoded (T2) and then accordingly decoded (T4) form of said primary data stream (D1).

8. Method according to any one of the preceding claims,
wherein said step (S2) of decorrelation is chosen, performed and/or designed so as to reduce the data or information amount or content within said decorrelated primary data stream (DD1) when compared to said primary data stream (D1).

9. Method according to any one of the preceding claims,
wherein within the common encoding process (P2) said process (P3) of generating said preview data stream (PD) and said steps of decorrelation (S2) and/or of encoding (S3) said primary data stream (D1) or said derivative thereof are performed parallely and/or essentially simultaneously.

10. Method according to claim 9,
wherein an appropriate step (S1) of delay compensation is applied to said primary data stream (D1) before said step of decorrelation (S2) and/or before said step of encoding (S3) said primary data stream (D1) or said derivative thereof so as to compensate any temporal delay.

11. Method according to anyone of the preceding claims,
wherein within said process (P3) of generating said preview data stream (PD) said primary data stream (D1) is subjected to a step (T1) of quality scaling which in particular varies with time so as to obtain a reduced quality primary data stream (RD 1) having a reduced quality content when compared to said high quality content of said primary data stream (D1).

12. Method according to claim 11,
wherein within said process (P3) of generating said preview data stream (PD) said reduced quality primary data stream (RD1) are subjected to a step (T2) of encoding so as to obtain said preview data stream (PD) having a reduced amount/content of data/information when compared to said reduced quality primary data stream (RD1) and/or to said primary data stream (D1).

13. Method according to any one of the preceding claims,
wherein the step (S3) of encoding said primary data stream (D1) or said derivative (DD1) thereof, the step (S2) of decorrelating or decorrelation and the process (P3) of generating said preview data stream (PD) are built in and/or embedded within a common process (P5) of encoding, decorrelating and splitting, in particular by integrating these processes/steps within a single and common module or encoder.

14. Method according to claim 13,
wherein said common process (P5) of encoding, decorrelating and splitting comprises a step (N2) of time variant scaling and splitting.

15. Method according to claim 14,
wherein said step (N2) of time variant scaling and splitting is designed to perform a first time variant coefficient quantization of said primary data stream (D1) or of a derivative (C1) thereof - in particular with respect to a low quality profile - in order to obtain said preview data stream (PD) or a pre-form (C2) thereof.

16. Method according to any one of the preceding claims 14 or 15,
wherein said step (N2) of time variant scaling and splitting is designed to perform a second time variant coefficient quantization of said primary data stream (D1) or of a derivative (C1) thereof - in particular with respect to a high quality profile - in order to obtain said encoded primary data stream (ED1) or a pre-form (C3) thereof.

17. Method according to any one of the preceding claims 14 or 15,
wherein before said second time variant coefficient quantization of said primary data stream (D1) or of said derivative (C1) thereof said preview data stream (PD) or said pre-form (C2) thereof is subtracted from said primary data stream (D1) or from said derivative (C1) thereof in order to decorrelate said primary data stream (D1) or said derivative (C1) thereof from said primary data stream (D1) or from said derivative (C1) thereof.

18. Method according to any one of the preceding claims 13 to 17,
wherein said common process (P5) of encoding, decorrelating and splitting comprises as an entry step a step (N1) of pre-encoding said primary data stream (D1), in particular in order to obtain said derivative (C1) of said primary data stream (D1) and/or in particular before said step (N2) of time variant scaling and splitting.

19. Method according to any one of the preceding claims 13 to 18,
wherein said common process (P5) of encoding, decorrelating and splitting comprises as at least one exit step at least one step of post-encoding (N3) said pre-form (C2) of said preview data stream (PD) and/or of post-encoding (N4) said pre-form (C3) of said encoded primary data stream (ED1), in particular in order to obtain said preview data stream (PD) and said encoded primary data stream (ED1), respectively, and/or in particular after said step (N2) of time variant scaling and splitting.

20. Method according claim 19,
- wherein as a first exit step a step of post-encoding (N3) said pre-form (C2) of said preview data stream (PD) is performed in order to obtain said preview data stream (PD), and
- wherein as a second exit step a step of post-encoding (N4) said pre-form (C3) of said encoded primary data stream (ED1) is performed in order to obtain said encoded primary data stream (ED).

21. System, apparatus and/or device for pre-processing digital data which is adapted, designed and/or has means in order to realize and/or to perform the method for pre-processing digital data according to any one of the preceding claims 1 to 20 and/or steps thereof.

22. Digital full data stream (D2),
which is generated by a method for pre-processing digital data according to any one of the claims 1 to 20 and/or by a system, apparatus or device according to claim 21.

23. Preview data stream (PD),
which is generated by a method for pre-processing digital data according to any one of the claims 1 to 20 and/or by a system, apparatus or device according to claim 21.

24. Computer program product,
comprising computer program means which is adapted and/or designed to realize and/or to perform a method for pre-processing digital data according to any one of the claims 1 to 20 and/or steps thereof and/or the system for pre-processing digital data according to claim 21 when it is executed on a computer, a digital processing means, and/or the like.

25. Computer readable storage medium,
comprising a computer program product according to claim 24.

26. Digital to analog conversion system,
- having a digital/analog conversion functionality (11) or unit, and
- having a logic functionality (12) or unit,
- wherein said digital/analog conversion functionality (11) or unit and said logic functionality (12) or unit are contained, embedded and/or sealed in or within one single and common unit, device and/or circuit, and
- wherein said digital/analog conversion functionality (11) or unit is arranged and/or designed to be programmably defined and/or definable, in particular externally.

27. Analog to digital conversion system,
- having an analog/digital conversion functionality (21) or unit, and
- having a logic functionality (22) or unit,
- wherein said analog/digital conversion functionality (21) or unit and said logic functionality (22) or unit are contained, embedded and/or sealed in or within one single and common unit, device and/or circuit, and
- wherein said analog/digital conversion functionality (22) or unit is arranged and/or designed to be programmably defined and/or definable, in particular externally.

28. Conversion system according to any one of the preceding claims 26 or 27,
wherein said digital/analog conversion functionality (11) or unit and/or said analog/digital conversion functionality (22) or unit are arranged and/or designed to be - in particular programmably - reconfigurable, in particular externally.

29. Digital to analog conversion system,
- having a digital/analog conversion functionality (11) or unit, and
- having a logic functionality (12) or unit,
- wherein said digital/analog conversion functionality (11) or unit and said logic functionality (12) or unit are contained, embedded and/or sealed in or within one single and common unit, device and/or circuit, and
- wherein said digital/analog conversion functionality (11) or unit is arranged and/or designed to be - in particular programmably - reconfigurable, in particular externally.

30. Analog to digital conversion system,
- having an analog/digital conversion functionality (21) or unit, and
- having a logic functionality (22) or unit,
- wherein said analog/digital conversion functionality (21) or unit and said logic functionality (22) or unit are contained, embedded and/or sealed in or within one single and common unit, device and/or circuit.
- wherein said analog/digital conversion functionality (22) or unit is arranged and/or designed to be - in particular programmably - reconfigurable, in particular externally.

31. Conversion system according to any one of the preceding claims 26 to 30,
wherein said digital/analog conversion functionality (11) or unit and/or said analog/digital conversion functionality (22) or unit are arranged and/or designed to be programmably defined and/or definable, in particular externally.

32. Conversion system according to any one of the preceding claims 26 to 31,
wherein a reconfiguration means (15, 25) - in particular a reconfiguration line - is provided for externally programming and/or reconfiguring said logic functionality (12, 22) or unit.

33. Conversion system according to claim 32,
wherein said reconfiguration means (15, 25) is directly connected and/or connectable to said logic functionality (12, 22) or unit.

34. Conversion system according to any one of the preceding claims 26 to 33,
wherein said logic functionality (12, 22) or unit is designed, configured and/or configurable to be or to contain an encryption and/or a decryption functionality for digital data.

35. Conversion system according to any one of the preceding claims 26 to 34,
wherein said logic functionality (12) or unit is arranged and/or designed to receive digital input data (I) for logic processing and to supply said logically processed input data (LI) as its output data (O), in particular as input data for said digital/analog conversion functionality (11) or unit, in particular to an input terminal thereof for digital/analog conversion.

36. Conversion system according to any one of the preceding claims 26 to 35,
wherein said logic functionality (22) or unit is arranged and/or designed to receive digital input data (I) for logic processing from said analog/digital conversion functionality (21) or unit, in particular from an output terminal thereof and to provide said logically processed input data (LI) as output data (O).

37. Application of the conversion system (10, 20) according to any one of the preceding claims 26 to 36:
- as or within an encryption/decryption system or device,
- as or within an electronic customer device,
- as or within a data format adaptation system or device,
- as or within a pre-processing system or device for signal and/or data conversion and/or adaptation,
- as or within a linearization system of or for a power amplifier, in particular in or for a wireless transmission system, and/or the like.

38. Computer program product,
comprising computer program means which is designed and/or adapted to realize and/or to perform the inventive conversion system according to any one of the preceding claims 26 to 36 and/or any of the applications according to claim 37 and/or parts or steps thereof when it is executed on a computer, a digital signal processing means, and/or the like.

39. Computer readable storage medium,
comprising a computer program product according to claim 38.
